# EUROPÄISCHE PATENTSCHRIFT

(11) **EP 0 611 339 B1**
(45) Veröffentlichungstag und Bekanntmachung des Hinweises auf die Patenterteilung: **27.01.1999**
(21) Anmeldenummer: 93912786.6
(22) Anmeldetag: 25.05.1993
(51) Int. Cl.: B29B 17/00, B27N 3/06

(54) **FORMKÖRPER AUS STÜCKIGEN ZELLULOSEHALTIGEN KUNSTSTOFFMATERIAL UND EINEM THERMOPLASTISCHEN KUNSTSTOFFMATERIAL**
FORMED BODY WITH THERMOPLASTIC MATERIAL AND AGGLOMERATED MATERIAL CONTAINING CELLULOSE
CORPS MOULE EN MATERIAU THERMOPLASTIQUE ET EN PELLICULES EN CELLULOSE AGGLOMEREES

(30) Priorität: 26.05.1992 DE 4217438; 21.10.1992 DE 4235530
(43) Veröffentlichungstag der Anmeldung: 24.08.1994
(73) Patentinhaber: TESCH, Günter, CH-1700 Fribourg (CH)
(72) Erfinder: TESCH, Günter, CH-1700 Fribourg (CH)
(74) Vertreter: Lesser, Karl-Bolko, Dipl.-Ing.
(86) Internationale Anmeldenummer: EP9301312
(87) Internationale Veröffentlichungsnummer: WO9324293

(56) Entgegenhaltungen:
- EP-A- 0 262 898
- EP-A- 0 409 525
- US-A- 3 718 536
- US-A- 5 137 668

## Beschreibung

Die Erfindung betrifft einen Formkörper aus stückigen zellulosehaltigen Material und einem thermoplastischen Kunststoffmaterial gemäß Oberbegriff des Anspruches 1.

Die EP-A 0 409 525 A3 beschreibt ein Verfahren zur Wiederverwertung von mit thermoplastischen Material beschichteten geshredderten Papier. Dieses mit einem thermoplastischen Material beschichtete Papier wird auf eine erste Bahn gelegt und dann von einer zweiten Bahn abgedeckt. Die drei Schichten werden danach durch Druck und Hitze miteinander verbunden, wobei die Schichten über den Schmelzpunkt des thermoplastischen Material hinaus erhitzt und in einer speziellen Presse gepreßt werden. Mit dieser Presse beschäftigt sich die EP-A 0 409 525 A3.

In dieser speziellen Presse, die aus einer Vielzahl von hintereinander angeordneten Walzen besteht, um die das dreischichtige System serpentinenförmig walkend geführt wird, werden die beiden Deckschichten und die zwischen den beiden Deckschichten befindlichen Stücke aus beschichteten Papier durch das vielfache Umlenken laufend gegeneinander verschoben, wobei durch das Verschieben das erweichte Polymer zwischen den Papierstücken einerseits und zwischen den Papierstücken und den Deckschichten gerieben und verschmiert wird, wodurch sich eine besonders gute Verbindung ergibt. Das thermoplastische Material liegt beim fertigen Produkt über die gesamte Bahn einstückig vor und schließt dabei durch das Walken die Papierstückchen ohne Lufteinschlüsse oder Lunker ein. Dieser Körper ist deshalb sehr kompakt und wird als Preßplatte verwendet.

Zusätzlich kann dem mit einem thermoplastischen Material beschichteten Papier noch zusätzliches thermoplastisches Material hinzugefügt werden, um den Anteil dieses Materials zwischen den beiden Außenschichten zu erhöhen.

Ohne die beiden Außenschichten kann dieser bahnförmige Körper nicht hergestellt werden.

Ein weiterer bekannter Körper ist aus der DE OS 21 36 444 bekannt. Dieser Formkörper besteht aus stückigem, durch Wärmeeinwirkung verbundenem Kunststoffolienmaterial. Die Struktur eines derartigen Körpers ist in den meisten Fällen mehrschichtig. Der beschriebene Formkörper kann zwar durch Druckeinwirkung partiell oder ganzflächig zusammengedrückt werden, jedoch bleibt seine Struktur immer locker und wackelig. Eine derartige Beschaffenheit ist für manche Anwendungen von Vorteil, für andere Anwendungen, wie z.B. Verwendung eines solchen Körpers als festes Baumaterial, ist sie nicht geeignet. Ein derartiger Körper ist auch nicht verformbar, woraus sich eine weitere Einschränkung seiner Verwendung ergibt.

Aufgabe der vorliegenden Erfindung ist es, einen Formkörper aus thermoplastischem stückigen Kunststoffmaterial anzugeben, welcher die o.g. Nachteile nicht aufweist, formfest und zu einem Raumkörper verformbar ist.

Diese Aufgabe wird durch den im Hauptanspruch angegebenen Formkörper gelöst. Das Verfahren zur Herstellung des Formkörpers gibt Anspruch 13 an. Die Unteransprüche stellen vorteilhafte Weiterbildungen dar.

Der erfindungsgemäße Formkörper besteht aus durch Druck- und Temperatureinwirkung miteinander zumindest teilweise verbundenen Stücken aus Kunststoffmaterial und / oder Kunststoffolienmaterial und aus Stücken oder Streifen aus zellulosehaltigem Material. Überraschenderweise hat sich herausgestellt, daß durch die Zugabe von zellulosehaltigem Material der Formkörper eine wesentlich höhere Festigkeit, insbesondere Biegefestigkeit aufweist als ein nur aus Kunststoffmaterial hergestellter Körper. Diese Eigenschaft ist wichtig, weil dadurch der Körper vielen Anwendungsbereichen zugänglich ist, bei denen er hoch beansprucht wird. Der erfindungsgemäße Formkörper weist bei einer gewissen Elastizität eine raumfeste Form auf. Durch den Einsatz in dem erfindungsgemäßen Körper werden vorteilhafterweise Kunststoffabfälle, insbesondere Kunststoffolienabfälle und Abfälle aus zellulosehaltigen Materialien auf einfache Weise verarbeitet und somit diese Materialien entsorgt. Kunststoffmaterialien werden nach üblichen Recyclingverfahren durch eine Veränderung ihrer Struktur, d.h. durch Aufschmelzen und Regranulieren wiederaufgearbeitet. Ähnlichen Wiederaufbereitungsverfahren müssen zellulosehaltige Materialien unterzogen werden, bevor man sie wiederverwenden kann und z.B. aus Altpapier neue Produkte herstellen kann. Gemäß der Erfindung können diese Materialien ohne Veränderung ihrer Struktur und ohne Zerstörung ihres "Energiegehaltes", der ihnen durch die Erstherstellung gegeben wurde, in dem erfindungsgemäßen Formkörper eingesetzt und zu einem neuen Produkt verarbeitet werden.

Gemäß einer vorteilhaften Ausgestaltung liegen die Stücke oder Streifen aus Kunststoffolienmaterial und Stücke oder Streifen aus zellulosehaltigem Material miteinander als Mischung vor oder sie werden in einzelnen Schichten aufeinander angeordnet und dann miteinander verbunden. Die regelmäßige Anordnung der beiden Materialien Schicht für Schicht trägt zur Verbesserung der mechanischen Eigenschaften des Formkörpers bei.

Für diese Anordnung der Schichten ist vorteilhaft, wenn das verwendete Kunststoffolienmaterial eben ist. Die Kunststoffolienstücke können aber auch eine räumliche Ausbildung aufweisen.

Durch die Druck- und Temperatureinwirkung, vorzugsweise im Bereich der Erweichungs- bzw. sogar im Bereich der Schmelztemperatur des eingesetzten Kunststoffs, wird erreicht, daß das zellulosehaltige Material in dein Kunststoffmaterial fest eingebunden und mit diesem fest verbunden wird. Liegt die Temperatur im Schmelztemperaturbereich des verwendeten Kunststoffes, so sind die Kunststoffmaterialstücke teilweise oder ganz miteinander verschmolzen. Die Stücke aus zellulosehaltigem Material sind in dem Kunststoffmaterial dadurch noch besser eingebunden.

Dem Kunststoffmaterial und dem zellulosehaltigen Material können Verstärkungsfasern wie z.B. Glasfasern zugegeben werden. Die Festigkeit eines solchen Formkörpers wird dadurch weiter erhöht. Der erfindungsgemäße Formkörper kann auch aus unterschiedlichen Arten von thermoplastischen Kunststoffmaterialien bestehen. Insbesondere ist es möglich, verschiedenartige und verschiedenfarbige Kunststoffolienabfälle einzusetzen. Diese werden in dem erfindungsgemäßen Formkörper verarbeitet, ohne daß die Eigenschaften des Formkörpers durch die Verschiedenheit des Kunststoffmaterials beeinträchtigt werden.

In einer vorteilhaften Ausgestaltung ist vorgesehen, daß die Oberfläche des Formkörpers mit einer abriebfesten, durchsichtigen oder farbigen Schicht versehen ist. Diese Ausgestaltung ist dann von Vorteil, wenn die Oberfläche des Formkörpers in Bereichen eingesetzt wird, wo sie erhöhter mechanischer oder chemischer Beanspruchung ausgesetzt ist.

In Weiterbildung der Erfindung ist vorgesehen, daß das zellulosehaltige Material Papier ist. Das verwendete Papier kann auch eine z.B. durch Knittern erzeugte, räumiiche Form aufweisen. Der Einsatz des räumlich ausgebildeten Papiers hat die vorteilhafte Wirkung als Abstandhalter zwischen den einzelnen Kunststoffmaterialstücken oder Kunststoffolienstücken, woraus sich eine besonders gut dämpfende bzw. eine elastische Struktur des Formkörpers ergibt. Der Papieranteil beträgt vorteilhafterweise 20 - 40%.

Durch die Verwendung von zerkleinertem Altpapier oder von Kunststoffolienabfällen wird der erfindungsgemäße Formkörper sehr preiswert.

Der erfindungsgemäße Formkörper erlaubt in einer besonders bevorzugten Ausführungsform auch den Einsatz von zellulosehaltigem Material, welches eine Schicht aus Aluminium und eine Schicht aus einem thermoplastischem Kunststoff aufweist. Die thermoplastische Kunststoffschicht derartiger zellulosehaltiger Materialien begünstigt unter Temperatureinwirkung die Verbindung zwischen diesem Material und dem Kunststoffmaterial.

Der Formkörper weist einen so guten Zusammenhalt auf, daß er verschiedenen Raumformgebungsverfahren zugänglich ist. Seine Festigkeit ist so hoch, daß er auch in hoch belasteten Bereichen eingesetzt werden kann, z.B. als Bodenplatte mit Bodenbelag, die von unten für eine Kabelverlegung geeignet ist und von oben eine begehbare Oberfläche aufweist. Diese Oberfläche kann bereits bei der Herstellung durch gezielten Einsatz von verschiedenfarbigen Folien mit einer Musterung versehen werden.

Dem Formkörper kann auch in einem Tiefziehprozeß eine Raumform gegeben werden. Dadurch entstehen z.B. eierkartonähnliche Strukturen, die als Isolier- oder Dämmbauteile, als Konstruktionsmaterial oder dgl. eingesetzt werden können.

Die Kunststoffmaterialstücke und / oder Kunststoffolienstücke und das stückige zellulosehaltige Material sind unter Druck- und Temperatureinfluß miteinander zu einem einen festen Zusammenhalt aufweisenden Körper verbunden, jedoch ist die Struktur des Formkörpers nicht immer homogen. Die einzelnen Kunststoffstücke sind mindestens teilweise miteinander verschmolzen oder verbunden, jedoch ist Struktur des gesamten Körpers, d.h. sein Aufbau aus stückigem Material im wesentlichen noch erkennbar. Es sind stets Lufteinschlüsse oder Lunker vorhanden an den Stellen, an welchen das Kunststoffmaterial nur teilweise miteinander und mit dem zellulosehaltigen Material verbunden ist.

Das Verfahren zur Herstellung des erfindungsgemäßen Formkörpers wird so durchgeführt, daß Kunststoffstücke und / oder Kunststoffolienstücke und Stücke aus zellulosehaltigem Material als Mischung oder in einzelnen Materialschichten zu einer Bahn abgelegt werden und durch Druck- und Temperatureinfluß zu einem zusammenhängenden festen Formkörper verbunden werden. Die Verbindung unter Druck- und Temperatureinfluß kann in einem Warmwalz- oder Pressvorgang erfolgen. Es ist vorteilhaft, wenn die Aufschichtung des Kunstoffmaterials und des zellulosehaltigen Materials so erfolgt, daß bei der Herstellung eines Raumkörpers die Schichthöhe ungefähr dem Profil des zur Herstellung eines Raumkörpers eingesetzten Preßstempels entspricht. Dadurch ist eine gleichmäßige Materialverteilung im fertigen Raumkörper gewährleistet, ohne daß das Material durch das formgebende Pressverfahren über seine Fläche nennenswert unterschiedlich verdichtet wird. Es ist selbstverständlich, daß für manche Anwendungen unterschiedliche Verdichtungsgrade des Formkörpers über seine Fläche von Vorteil und beabsichtigt sind.

Die Erfindung wird anhand eines in den nachfolgenden Zeichnungen dargestellten Ausführungsbeispieles näher erläutert. Es zeigen:
- Fig. 1: eine schematische Darstellung der Oberfläche des erfindungsgemäßen Formkörpers;
- Fig. 2: eine schematische Darstellung eines Schnitts durch den Körper der Fig. 1;
- Fig. 3: eine schematische Darstellung eines Schnittes des als Kabelkanal ausgebildeten Formkörpers, und
- Fig. 4: eine Seitenansicht eines tiefgezogenen, eierkartonähnlichen Formkörpers.

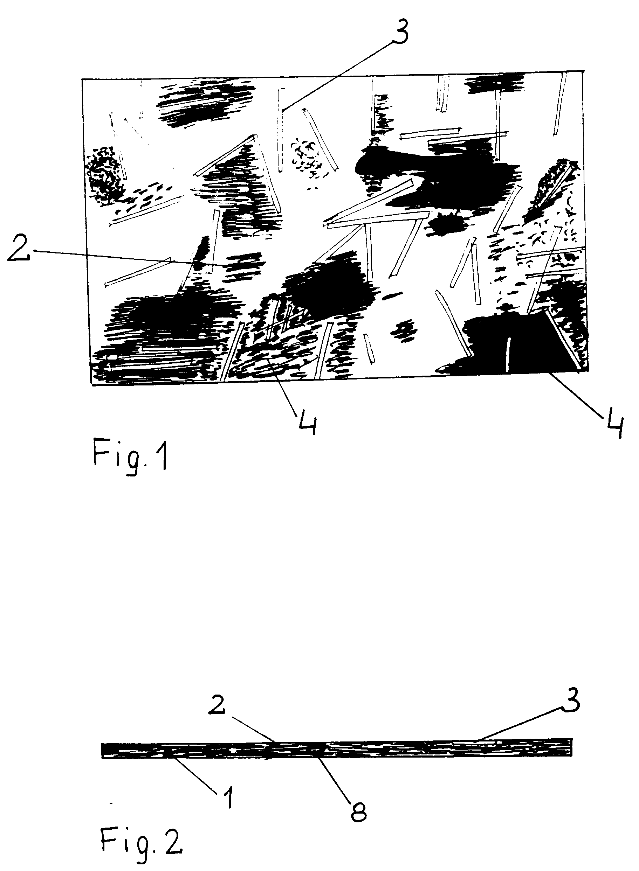

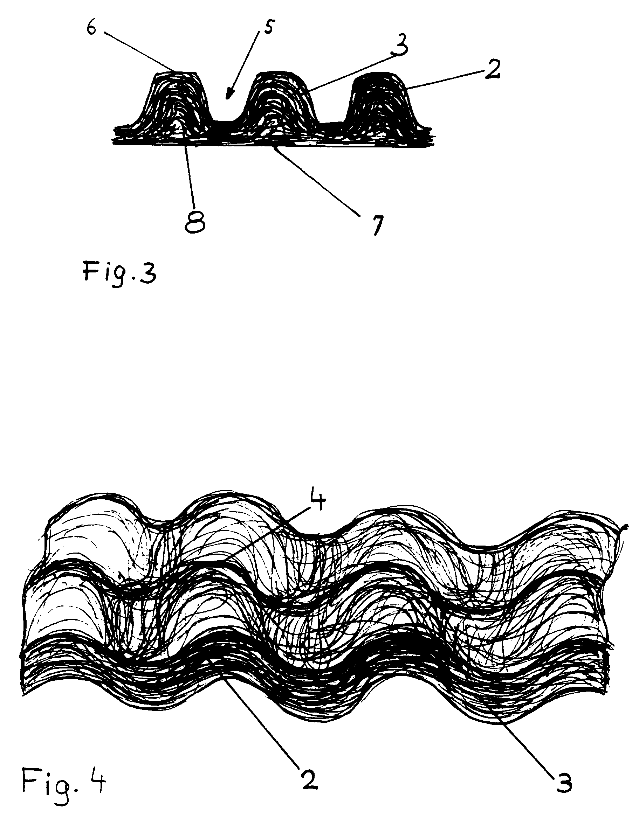

Der Formkörper besteht aus miteinander durch Druck- und Temperatureinfluß verbundenen Stücken 1 aus Kunststoffmaterial und / oder aus Kunststoffolienstücken 2 und aus Stücken 3 aus zellulosehaltigem Material. Die Folienstücke 2 und die Stücke 3 aus zellulosehaltigem Material sind miteinander so verbunden, daß der Aufbau des Formkörpers aus Materialstücken zwar erkennbar ist, wie insbesondere aus Fig. 2 und 3 ersichtlich. Der Formkörper weist Lufteinschlüsse bzw. Lunker auf. Durch den Temperatureinfluß sind die Kunststoffolienstücke 2 im Bereich der Oberfläche miteinander verschmolzen, so daß Bereiche 4 von verwaschenen Strukturen aus verschiedenen Farben entstehen. In diesen Bereichen 4 sind jedoch immer noch die einzelnen Papierstreifen 3 erkennbar. Besonders verwaschene Oberflächenbereiche 4 ergeben sich durch das Tiefziehen des Formkörpers (Fig. 4), wobei durch den zusätzlichen Temperatureinfluß während des Tiefziehprozesses die Kunststoffolien jedenfalls im Bereich der Oberfläche schmelzen und die Papierstücke soweit umgeben, daß diese an seiner Oberfläche nicht mehr erkennbar sind. Die Oberfläche eines tiefgezogenen Formkörpers weist also nur ineinander übergehende, verwaschene Farbbereiche 4 auf.

In Fig. 3 ist ein als Bodenplatte mit integrierten Kabelkanalbereichen 5 und einem Bodenbelag 7 räumlich ausgebildeter Formkörper dargestellt. In den Räumen 5 können z.B. elektrische Kabel verlegt werden. Längs der Abschnitte 6 liegt der Körper auf einer Unterlage, die Fläche 7 bildet den begehbaren Bodenbelag.

## Patentansprüche

1. Formkörper aus stückigen zellulosehaltigen Material und einem thermoplastischen Kunststoffmaterial, wobei die zellulosehaltigen Materialstücke mittels des thermoplastischen Kunststoffs durch Druck- und Temperatureinfluß miteinander verbunden sind, dadurch gekennzeichnet, daß der Formkörper aus durch Druck- und Temperatureinfluß miteinander verbundenen Stücken (1,2) aus Kunststoffmaterial und / oder Kunststoffolienmaterial und Stücken oder Streifen (3) aus zellulosehaltigem Material besteht.

2. Formkörper nach Anspruch 1, dadurch gekennzeichnet, daß die Kunststoffolienstücke (2) und Kunststoffstücke (1) teilweise oder ganz miteinander verschmolzen sind.

3. Formkörper nach Anspruch 1 oder 2, dadurch gekennzeichnet, daß die Stücke (3) aus zellulosehaltigem Material zwischen den Kunststoffolienstücken (2) und Stücken (1) aus Kunststoffmaterial fest eingebunden und mit diesen fest verbunden sind.

4. Formkörper nach einem der vorangegangenen Ansprüche, dadurch gekennzeichnet, daß die Oberfläche des Formkörpers mehrfarbig ist und Bereiche mit verwaschenen Strukturen (4) aufweist.

5. Formkörper nach einem der vorangegangenen Ansprüche, dadurch gekennzeichnet, daß das stückige Kunststoffmaterial aus Abfallmaterial, insbesondere Kunststoffabfallfolien stammt.

6. Formkörper nach einem der vorangegangenen Ansprüche, dadurch gekennzeichnet, daß das zellulosehaltige Material Papier, insbesondere Altpapier ist.

7. Formkörper nach Anspruch 6, dadurch gekennzeichnet, daß der Papieranteil 20 bis 40% beträgt.

8. Formkörper nach Anspruch 7, dadurch gekennzeichnet, daß die Papierstücke eine räumliche, z.B. durch Knittern erzeugte Form aufweisen.

9. Formkörper nach einem der Ansprüche 1 bis 5, dadurch gekennzeichnet, daß das zellulosehaltige Material eine Schicht aus Aluminium und einem thermoplastischen Kunststoff aufweist.

10. Formkörper nach einem der vorangegangenen Ansprüche, dadurch gekennzeichnet, daß er eine profilierte Raumform aufweist.

11. Formkörper nach einem der vorangegangenen Ansprüche, dadurch gekennzeichnet, daß er eine tiefgezogene Raumform aufweist.

12. Formkörper nach einem der vorangegangenen Ansprüche, dadurch gekennzeichnet, daß zwischen den Stücken (1,2,3) aus Kunststoff- bzw. zellulosehaltigem Material Lufteinschlüsse bzw. Lunker vorhanden sind.

13. Verfahren zur Herstellung eines Formkörpers nach einem oder mehreren der vorangegangenen Ansprüche, wobei Kunststoffstücke (1) und / oder Kunststoffolienstücke (2) und Stücke (3) aus zellulosehaltigem Material vermischt oder in Schichten zu einer Bahn abgelegt und durch Druck- und Temperatureinfluß zu einem zusammenhängenden, festen Formkörper verbunden werden.

14. Verfahren nach Anspruch 13, dadurch gekennzeichnet, daß abwechselnd Schichten von Kunststoffolienstücken (2) und / oder Stücken (3) aus zellulosehaltigem Material aufeinander angeordnet werden.

15. Verfahren nach Anspruch 13 oder 14, dadurch gekennzeichnet, daß die Verbindung des Kunststoffmaterials (12) und des zellulosehaltigen Materials (3) unter Druck- und Temperatureinfluß durch Walzen oder Pressen erfolgt.

16. Verfahren nach einem der Ansprüche 13 bis 15, dadurch gekennzeichnet, daß bei der Herstellung von Raumkörpern die Schichthöhe der aus Kunststoffstücken (1) und / oder Kunststoffolienstücken (2) und Stücken (3) aus zellulosehaltigem Material aufgeschütteten Bahn über die Fläche unterschiedlich ist, und die Höhe der Bahn in etwa dem Profil des eingesetzten Preßstempels entspricht.

## Claims

1. Shaped body comprising pieces of cellulose-containing material and a thermoplastic synthetic resin material, the pieces of cellulose-containing material being bonded together by means of the thermoplastic synthetic resin by the action of pressure and temperature, characterised in that the shaped body comprises pieces (1, 2) of synthetic resin material and/or synthetic resin film material and pieces or strips (3) of a cellulose-containing material connected together by the action of pressure and temperature.

2. Shaped body according to claim 1, characterised in that the pieces (2) of synthetic resin film and pieces (1) of synthetic resin are partially or wholly melted together.

3. Shaped body according to claim 1 or 2, characterised in that the pieces (3) of cellulose-containing material are rigidly bonded in between the pieces (2) of synthetic resin film and pieces (1) of synthetic resin material and firmly bonded to these.

4. Shaped body according to one of a foregoing claims, characterised in that the surface of the shaped body is multi-coloured and has regions with deformed structures ( 4).

5. Shaped body according to one of the foregoing claims, characterised in that the pieces of synthetic resin material originate from scrap material, in particular synthetic resin film scrap.

6. Shaped body according to one of the foregoing claims, characterised in at the cellulose-containing material is paper, in particular scrap paper.

7. Shaped body according to claim 6, characterised in that the proportion of paper amounts to 20 to 40 %.

8. Shaped body according to claim 7, characterised in that the pieces of paper have a three-dimensional form, produced for example by crumpling.

9. Shaped body according to one of claims 1 to 5, characterised in that the cellulose-containing material comprises a layer of aluminium and a thermoplastic synthetic resin.

10. Shaped body according to one of the foregoing claims, characterised in that it has a profiled spatial form.

11. Shaped body according to one of the foregoing claims, characterised in that it has a deep-drawn spatial form.

12. Shaped body according to one of the foregoing claims, characterised in that air bubbles or voids are present between the pieces (1, 2, 3) of synthetic resin and cellulose-containing material.

13. Process for manufacturing a shaped body according to one or more of the foregoing claims, in which pieces (1) of synthetic resin and /or pieces (2) of synthetic resin film and pieces (3) of cellulose-containing material are mixed together or deposited in layers to form a track and are bonded together by the action of pressure and temperature to form a coherent rigid shaped body.

14. Process according to claim 13, characterised in that or alternate layers of pieces (2) of synthetic resin film and/or pieces (3) of cellulose-containing material are arranged upon one another.

15. Process according to claim 13 or 14, characterised in that the bonding of the synthetic resin material (12) and the cellulose-containing material (3) takes place by rolling or pressing under the action of pressure and temperature.

16. Process according to one of claims 13 to 15, characterised in that in the manufacture of three-dimensional bodies the layer height of the track of pieces (1) of synthetic resin and /or pieces (2) of synthetic resin film and pieces (3) of cellulose-containing material deposited is different over the area, and the height of the track corresponds approximately to the profile of the press stamp applied.

## Revendications

1. Corps moulé en morceaux de matériau à teneur en cellulose et un matériau thermoplastique, les morceaux de matériau à teneur en cellulose étant assemblés l'un à l'autre à l'aide du matériau thermoplastique, sous l'action de la pression et de la température, caractérisé par le fait que le corps moulé est composé de morceaux (1, 2) de matériau plastique et/ou de films plastiques assemblés l'un à l'autre sous l'action de la pression et de la température et de morceaux ou bandes (3) de matériau à teneur en cellulose.

2. Corps moulé suivant la revendication 1, caractérisé par le fait que les morceaux de films plastiques (2) et les morceaux de matériau plastique (1) sont partiellement ou totalement assembles l'un à l'autre par fusion.

3. Corps moulé suivant la revendication 1 ou 2, caractérisé par le fait que les morceaux (3) de matériau à teneur en cellulose sont fermement incorporés entre les morceaux de films plastiques (2) et les morceaux (1) de matériau plastique et rendus solidaires de ceux-ci.

4. Corps moulé suivant l'une des revendications précédentes, caractérisé par le fait que la surface du corps moulé est multicolore et présente des zones de structures vagues (4).

5. Corps moulé suivant l'une des revendications précédentes, caractérisé par le fait que le matériau plastique en morceaux provient de déchets de matériaux, en particulier de déchets de films plastiques.

6. Corps moulé suivant l'une des revendications précédentes, caractérisé par le fait que le matériau à teneur en cellulose est du papier, en particulier du vieux papier.

7. Corps moulé suivant la revendication 6, caractérisé par le fait que la proportion de papier est de 20 à 40%.

8. Corps moulé suivant la revendication 7, caractérisé par le fait que les morceaux de papier présentent une forme spatiale produite, par exemple, par froissement.

9. Corps moulé suivant l'une des revendications 1 à 5, caractérisé par le fait que le matériau à teneur en cellulose présente une couche d'aluminium et de matériau thermoplastique.

10. Corps moulé suivant l'une des revendications précédentes, caractérisé par le fait qu'il présente une forme spatiale profilée.

11. Corps moulé suivant l'une des revendications précédentes, caractérisé par le fait qu'il présente une forme spatiale emboutie.

12. Corps moulé suivant l'une des revendications précédentes, caractérisé par le fait qu'entre les morceaux (1, 2, 3) de matériau plastique ou de matériau à teneur en cellulose sont présents des inclusions d'air ou des vides.

13. Procédé de fabrication d'un corps moulé suivant l'une ou plusieurs des revendications précédentes, dans lequel des morceaux de matériau plastique (1) et/ou des morceaux de films plastiques (2) et des morceaux (3) de matériau à teneur en cellulose sont déposés mélangés ou en couches, pour former une nappe, et assemblés sous l'action de la pression et de la température, pour former un corps moulé stable et cohérent.

14. Procédé suivant la revendication 13, caractérisé par le fait que des couches de morceaux de films plastiques (2) et/ou de morceaux (3) de matériau à teneur en cellulose sont disposées alternativement l'une au-dessus de l'autre.

15. Procédé suivant la revendication 13 ou 14, caractérisé par le fait que l'assemblage du matériau plastique (12) et du matériau à teneur en cellulose (3) s'effectue par laminage ou pressage sous l'action de la pression et de la température.

16. Procédé suivant l'une des revendications 13 à 15, caractérisé par le fait que, lors de la fabrication d'éléments spatiaux, la hauteur de couche de la nappe constituée par entassement de morceaux de matériau plastique (1) et/ou de morceaux de films plastiques (2) et de morceaux (3) de matériau à teneur en cellulose est différente sur la surface et que la hauteur de la nappe correspond environ au profil du poinçon de presse utilisé.
